# EUROPEAN PATENT APPLICATION

(11) **EP 4 725 755 A1**
(43) Date of publication of application: **15.04.2026**
(21) Application number: 25204331.0
(22) Date of filing: 24.09.2025
(51) Int. Cl.: B60L 53/65, B60L 53/66, B60L 53/68, H04L 9/32, H04L 9/40, H04W 12/069

(54) **AUTHENTICATION SYSTEM AND VEHICLE**

(30) Priority: 11.10.2024 JP 2024178787
(71) Applicant: TOYOTA JIDOSHA KABUSHIKI KAISHA, Toyota-shi, Aichi-ken 471-8571 (JP)
(72) Inventor: MISAWA, Takahiro, Toyota-shi 471-8571 (JP)
(74) Representative: D Young & Co LLP

(57) **Abstract**

A server performs processing including the steps of obtaining an upper limit number of digital certificates that can be stored (S102) when determining that a priority change has been notified (YES in S100), obtaining information about a stored digital certificate (S104), transmitting priority information (S108) when determining that a digital certificate having a priority higher than that of an existing distal certificate has been set (YES in S106), transmitting certificate data (S110), and transmitting the priority information (S112) when determining that the digital certificate having a priority higher than that of the existing distal certificate has not been set (NO in S106).

## Description

### CROSS REFERENCE TO RELATED APPLICATIONS

This nonprovisional application is based on Japanese Patent Application No. 2024-178787 filed on October 11, 2024 with the Japan Patent Office, the entire contents of which are hereby incorporated by reference.

### BACKGROUND

### Field

The present disclosure relates to an authentication system.

### Description of the Background Art

Japanese National Patent Publication No. 2022-527902 discloses a charging station that verifies a vehicle digital signature received from a vehicle using a vehicle public key and enables power supply to the vehicle in response to a successful verification.

### SUMMARY

Information about digital certificates including the vehicle digital certificate described above are stored in a controller of the vehicle via a communication network. In the controller of the vehicle, however, the number of digital certificates that can be stored is limited due to storage capacity, standard, or the like. For example, when a service contract is made with business operators of a plurality of charging stations, thus, all the digital certificates may not be stored, leading to a decrease in convenience of the charging station corresponding to the digital certificate whose storage has failed.

An object of the present disclosure is to provide an authentication system and a vehicle that suppress a decrease in convenience while suppressing an increase in the number of digital certificates to be stored.

An authentication system according to an aspect of the present disclosure includes a server that transmits a digital certificate used for authentication in use of a power stand that performs power transmission between a power storage device mounted in an electrically powered vehicle and the power stand, and a vehicle including a storage device that stores the digital certificate received from the server. Upon receipt of a first priority of the digital certificate, the server transmits the digital certificate having the first priority to the vehicle when the first priority is higher than a second priority of an existing digital certificate stored in the storage device, and does not transmit the digital certificate having the first priority to the vehicle when the first priority is lower than the second priority.

Thus, the digital certificate having the first priority is transmitted to the vehicle when the first priority is higher than the second priority, and accordingly, a power stand corresponding to the digital certificate having the first priority can be used as the digital certificate having the first priority is stored in the storage device of the vehicle. When the first priority is lower than the second priority, the digital certificate having the first priority is not transmitted, and accordingly, a decrease in convenience can be suppressed by maintaining a digital certificate having a high priority while suppressing an increase in the number of digital certificates stored in the storage device of the vehicle.

In an embodiment, upon receipt of the digital certificate having the first priority, the vehicle replaces the existing digital certificate with the digital certificate having the first priority.

Thus, a decrease in convenience can be suppressed by maintaining a digital certificate having a high priority even when digital certificates that can be stored are few.

In another embodiment, upon receipt of the digital certificate having the first priority and when an upper limit number of digital certificates are stored in the storage device, the vehicle replaces the digital certificate having a lowest priority among a plurality of the digital certificates with the digital certificate having the first priority.

Thus, a power stand corresponding to the digital certificate having the first priority, which is a high priority, can be used, thus suppressing a decrease in convenience.

In still another embodiment, the authentication system includes a terminal. The terminal sets the first priority in response to input of a user's operation and transmits information about the first priority to at least any one of the server and the vehicle.

Thus, the server can determine whether or not to transmit a digital certificate to a vehicle in accordance with a result of the comparison between the first priority and the second priority received from the terminal.

In still another embodiment, the vehicle sets the first priority in response to input of a user's operation and transmits information about the first priority to the server.

Thus, the server can determine whether or not to transmit a digital certificate to the vehicle in accordance with a result of the comparison between the first priority and the second priority received from the terminal.

In still another embodiment, the server transmits information about the first priority to the vehicle when the digital certificate having the first priority has been stored in the storage device.

Thus, when the priority of the digital certificate stored in the storage device of the vehicle has been changed, the digital certificate can be used in accordance with the changed priority, thus suppressing a decrease in convenience.

In still another embodiment, the vehicle includes a navigation system. The vehicle sets a priority of the digital certificate higher than that of the existing digital certificate and transmits information about the set priority to the server, the digital certificate allowing use of the power stand located on or around a travel route set by the navigation system.

Thus, the priority of the digital certificate allowing use of the power stand located on or around the travel route is set higher than the priority of the existing distal certificate, enabling quick charging or the like in use of the power stand when the vehicle travels on the set travel route.

A vehicle according to another aspect of the present disclosure includes a power storage device, a storage device that stores a digital certificate used for authentication in use of a power stand that performs power transmission between the power storage device and the power stand, a communication device configured to communicate with a server that is a transmission source of the digital certificate, and a controller that writes the digital certificate to the storage device upon receipt of the digital certificate from the server. The controller compares a first priority of the digital certificate obtained by the server with a second priority of an existing digital certificate stored in the storage device, changes the digital certificate to the digital certificate used preferentially for authentication in use of the power stand when there is a change in relationship of magnitude between these priorities, and does not change the digital certificate used preferentially when there is no change in relationship of magnitude between these priorities.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an example overall configuration of an authentication system according to the present embodiment.
Fig. 2 is a sequence diagram showing an example charging process among a vehicle, a power stand, and a server.
Fig. 3 is a flowchart showing example processing performed by the server.
Fig. 4 is a flowchart showing example processing performed in the vehicle.
Fig. 5 is a sequence diagram showing an example operation of the authentication system according to the present embodiment.
Fig. 6 is a sequence diagram showing another example operation of the authentication system according to the present embodiment.

### DESCRIPTION OF THE PREFERRED EMBODIMENTS

An embodiment of the present disclosure will be described with reference to the drawings. In the drawings, the same or corresponding components have the same reference characters allotted.

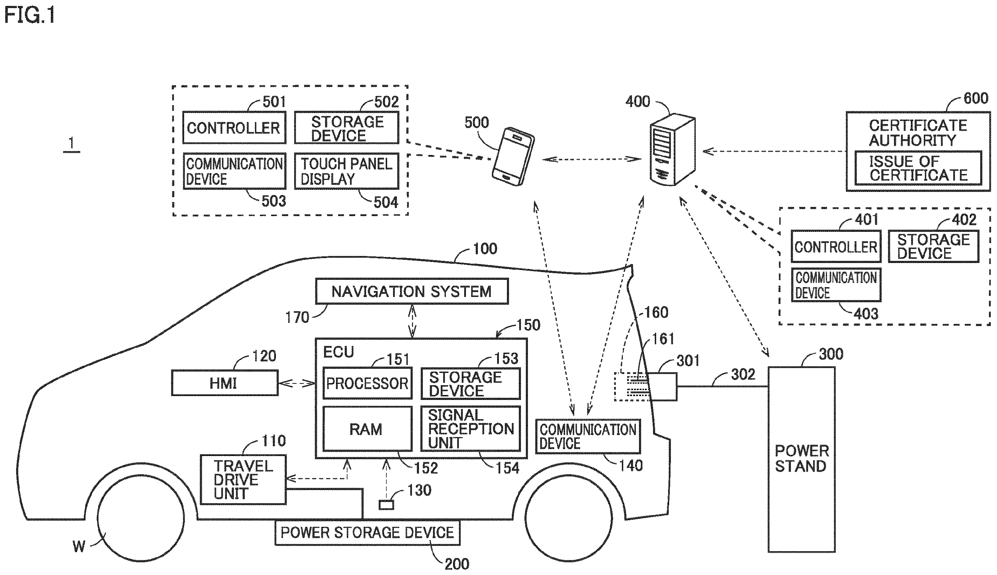

Fig. 1 shows an example overall configuration of an authentication system 1 according to the present embodiment. Authentication system 1 includes a vehicle 100, a power stand 300, a server 400, a terminal 500, and a certificate authority 600.

Vehicle 100 will be described as a battery electric vehicle (BEV) without an engine by way of example, but vehicle 100 is only required to be any electrically powered vehicle driven by an electric motor and may be a hybrid electric vehicle (HEV) with an engine or a plug-in hybrid electric vehicle (PHEV). Vehicle 100 includes a power storage device 200 that stores electric power for traveling. Vehicle 100 is configured to travel by supplying the electric power stored in power storage device 200 to the electric motor (rotating electric machine).

Power stand 300 is configured to enable power transmission between power storage device 200 mounted in vehicle 100 and power stand 300. Specifically, power stand 300 is configured to charge power storage device 200 by means of a plug and charge (PnC) charging method. The PnC charging method refers to a charging method of automatically performing processes such as billing authentication and charging for using power stand 300 simply by connecting a connector 301 of power stand 300 to an inlet 160 of vehicle 100. Power stand 300 is assumed to be a charging stand capable of direct current (DC) charging, but may be, for example, a charging stand capable of alternating current (AC) charging or a power feeding stand capable of various types of power feeding.

Server 400 includes a controller 401, a storage device 402, and a communication device 403. Controller 401 is configured of a processor such as a central processing unit (CPU) and executes a program stored in storage device 402 including random access memory (RAM). Communication device 403 is configured to communicate with a communication device 140 of vehicle 100 and a communication device 503 of terminal 500 via a communication network (not shown).

Server 400 stores information about vehicle 100, information about terminal 500, and information about the user. Server 400 stores, for example, a digital certificate for using power stand 300 in vehicle 100. The digital certificate is, for example, an electronic certificate including public key information or the like. The digital certificate includes, for example, a charging contract certificate or the like. The charging contract certificate certifies the contents of the contract concluded between a mobility operator (MO) providing a charging service and a user of vehicle 100.

Certificate authority 600 includes a server belonging to a certificate organization and issues a digital certificate when accepting an application or the like as, for example, an expiration period of an existing digital certificate has elapsed or a new contract has been concluded. Certificate authority 600 transmits the issued digital certificate to server 400.

Vehicle 100 includes a monitoring module 130 and a controller (electronic control unit: ECU) 150.

Monitoring module 130 includes various sensors that detect the state (e.g., voltage, current, and temperature) of power storage device 200 and outputs a detection result to ECU 150. Monitoring module 130 may be a battery management system (BMS) that further has a state of charge (SOC) estimation function, a state of health (SOH) estimation function, a cell voltage equalization function, a diagnostic function, and a communication function, in addition to the sensor functions described above. ECU 150 can obtain the state (e.g., temperature, current, voltage, SOC, and internal resistance) of power storage device 200 based on the output from monitoring module 130. Power storage device 200 is charged (external charging) or discharged (external power feeding) by exchanging electric power with power stand 300.

ECU 150 is configured to perform charging control and discharging control of power storage device 200. ECU 150 includes a processor 151 configured of a CPU or the like, a RAM 152, a storage device 153, and a signal reception unit 154.

RAM 152 functions as a working memory for temporarily storing data processed by processor 151.

Storage device 153 is configured to retain the stored information. Storage device 153 stores a program, as well as information used in the program (e.g., maps, formulas, and various parameters). As processor 151 executes the program stored in storage device 153, various types of control in ECU 150 are performed. Storage device 153 further stores the digital certificate described above. ECU 150 controls charging authenticated by the digital certificate. When a digital certificate is newly obtained, the new digital certificate is downloaded, and the downloaded digital certificate is written to storage device 153.

Signal reception unit 154 receives a predetermined signal from any device other than ECU 150 mounted in vehicle 100. Signal reception unit 154 receives a predetermined signal (information) from, for example, a human machine interface (HMI) device 120 or communication device 140, which will be described later.

Vehicle 100 further includes a travel drive unit 110, HMI device 120, communication device 140, inlet 160, a navigation system 170, and drive wheels W.

Travel drive unit 110 is configured to cause vehicle 100 to travel using the electric power stored in power storage device 200. Travel drive unit 110 includes, for example, an unshown power control unit (PCU) configured of an inverter, a converter, a relay, and the like, an unshown motor generator (MG) including a three-phase AC rotary motor, and an unshown system main relay (SMR) that switches the connection/disconnection state of the power path between power storage device 200 and the PCU.

The PCU and the SMR are controlled by ECU 150. The MG is driven by the PCU and is configured to rotate drive wheels W. The PCU drives the MG using the electric power supplied from power storage device 200. Additionally, the MG is configured to perform regenerative power generation and supply the generated electric power to power storage device 200. The SMR is rendered closed (connected) during travel of vehicle 100.

Power storage device 200 is configured of a secondary battery such as a nickel metal hydride battery or a lithium-ion battery having a liquid electrolyte or a solid electrolyte. Power storage device 200 may be configured of, for example, a capacitor or the like instead of the secondary battery.

HMI device 120 includes an input device that receives input of a user's operation and a display device that displays information to the user. HMI device 120 may include a touch panel display. HMI device 120 displays information on the display device in response to a control signal from ECU 150.

Communication device 140 is configured to communicate with, for example, terminal 500 (e.g., smartphone) used by the user of vehicle 100 and server 400. Communication device 140 may include, for example, a communication interface (I/F) such as a data communication module (DCM) compatible with a predetermined communication format such as the fifth generation (5G) mobile communication system.

Inlet 160 is configured to allow connector 301 of power stand 300 to be inserted thereinto. Connector 301 is provided at the tip of a cable 302 attached to power stand 300. Vehicle 100 is electrically connected to power stand 300 as connector 301 is inserted into inlet 160. This enables power to be transmitted and received (charging or power feeding) between power stand 300 and vehicle 100.

When, for example, a destination is set by the user, navigation system 170 sets a travel route to the destination. Navigation system 170 navigates the vehicle to the destination by displaying, on the display device of HMI device 120, the location of the vehicle and the travel route on the map during traveling. Further, navigation system 170 is configured to search for a location of power stand 300 located on or around the travel route and display a search result (e.g., a location on the map) on the display device of HMI device 120. Navigation system 170 is configured to communicate with ECU 150.

Terminal 500 includes a controller 501, a storage device 502, communication device 503, and a touch panel display 504. Controller 501 is configured of a processor such as a CPU and executes a program stored in storage device 502 including RAM or the like. Communication device 503 is configured to communicate with communication device 140 of vehicle 100 and communication device 403 of server 400. Touch panel display 504 includes an unshown input device that receives input of a user's operation and an unshown display device that displays information to the user. Terminal 500 is a terminal of the user of vehicle 100. In server 400, terminal 500, vehicle 100, and the user are stored in correspondence with one another. Specifically, server 400 stores, for example, identification information identifying a user, identification information identifying vehicle 100, and identification information identifying terminal 500 in storage device 402 in association with one another. Further, server 400 stores, in storage device 402, information about the digital certificate stored in vehicle 100 in association with these pieces of identification information.

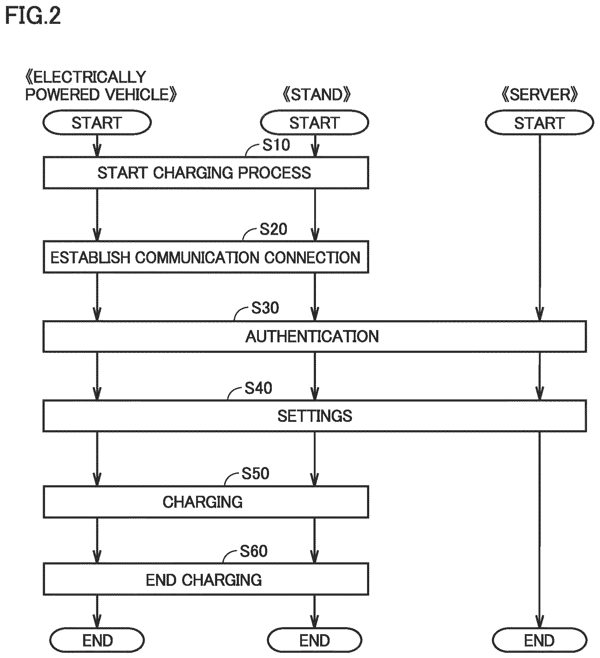

Fig. 2 is a sequence diagram showing an example charging process among vehicle 100, power stand 300, and server 400.

In step (hereinafter step will be referred to as S) 10, a charging process between vehicle 100 and power stand 300 is started. For example, the charging process is started when connector 301 is connected to inlet 160.

In S20, a secure communication connection is established between vehicle 100 and power stand 300.

In step S30, various types of authentication are performed between vehicle 100 and power stand 300 using a digital certificate stored in vehicle 100. For example, pieces of processing such as identification, authentication, and authorization are performed.

In S40, settings are performed. For example, a target setting, a charge scheduling setting, and any other setting are performed.

In S50, charging between vehicle 100 and power stand 300 is performed. In S60, charging is terminated.

The number of digital certificates that can be stored, which are used in the charging process described above, is limited by memory capacity, standard, or the like in storage device 153 of ECU 150 of vehicle 100. Thus, for example, when the user enters into a service contract with business operators of a plurality of power stands 300, all digital certificates may not be stored, leading to a decrease in the convenience of power stand 300 corresponding to a digital certificate whose storage has failed.

In the present embodiment, thus, upon receipt of a priority (first priority) of a new digital certificate, server 400 transmits the new digital certificate to vehicle 100 when the first priority is higher than the priority (second priority) of an existing digital certificate stored in storage device 153, and does not transmit the new digital certificate to vehicle 100 when the first priority is lower than the second priority.

Thus, when the first priority is higher than the second priority, the new digital certificate is transmitted to vehicle 100, and accordingly, power stand 300 corresponding to the new digital certificate can be used as the new digital certificate is stored in storage device 153 of vehicle 100. Further, when the first priority is lower than the second priority, the new digital certificate is not transmitted, and accordingly, a decrease in convenience can be suppressed by maintaining the existing digital certificate having a higher priority while suppressing an increase in the number of digital certificates stored in storage device 153 of vehicle 100.

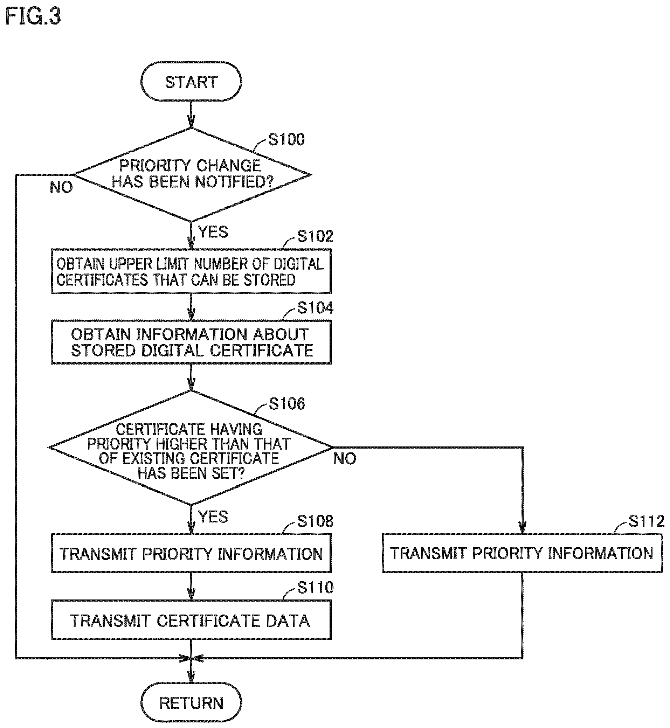

Referring to Fig. 3, example processing performed by server 400 (specifically, controller 401) will be described below. Fig. 3 is a flowchart showing example processing performed by server 400. A series of steps of processing shown in this flowchart are repeatedly performed at predetermined intervals.

In S100, server 400 determines whether it has been notified of a priority change. Server 400 determines that it has been notified of a priority change when, for example, it receives a notification of a change in the priority of a digital certificate from at least any one of vehicle 100 and terminal 500.

The user, for example, launches an application on terminal 500. The application displays, for example, a list of charging services contracted by the user, with a priority set for each charging service. The user can, for example, set the priority of the charging service displayed in the list on the application. For example, when the user performs an input operation to change the priority, such as setting the highest priority to a newly contracted charging service, changing the priorities of at least two of a plurality of existing charging services, or changing the charging service set to have the highest priority among the plurality of existing charging services, a notification of the priority change is provided from terminal 500 to server 400. The notification of the priority change includes information about the charging service whose priority has been changed. Alternatively, when the user performs an input operation to change the priority as described above on the touch panel display of HMI device 120 of vehicle 100, a notification of the priority change of the digital certificate is provided from vehicle 100 to server 400 as described above. When server 400 determines that it has been notified of the priority change (YES in S100), the processing proceeds to S102.

In S102, server 400 obtains an upper limit number of digital certificates that can be stored. Server 400 may, for example, store each vehicle 100 managed by server 400 in association with the upper limit number of digital certificates that can be stored in storage device 402, and read, from storage device 402, vehicle 100 corresponding to terminal 500, which is the notification source of a priority change, or the upper limit number of digital certificates that can be stored in vehicle 100, which is the notification source. Alternatively, server 400 may store each vehicle 100 managed by server 400 in storage device 402 in association with the type of a standard adopted for a digital certificate, and read, from storage device 402, vehicle 100 corresponding to terminal 500, which is the notification source of a priority change, or the type of the standard adopted in vehicle 100, which is the notification source, and determine the upper limit number of digital certificates that can be stored from the read standard. For example, server 400 obtains the upper limit number of digital certificates that can be stored, by determining that the upper limit number of digital certificates that can be stored is "1" for vehicle 100 that adopts international organization for standardization (ISO) 15118-2 as the standard for digital certificates, and determining that the upper limit number of digital certificates that can be stored is a predetermined number of "2" or more for vehicle 100 that adopts ISO 15118-20. The predetermined number is a value determined based on the memory capacity of ECU 150 or the like. Further, server 400 may obtain the upper limit number of digital certificates that can be stored from vehicle 100 corresponding to terminal 500 that is the notification source or from vehicle 100 that is the notification source. The processing then proceeds to S104.

In S104, server 400 obtains information about the stored digital certificate. Server 400 may read, from storage device 402, information about the digital certificate stored in association with vehicle 100 corresponding to terminal 500, which is the notification source managed by server 400, among vehicles 100. For example, in transmitting a digital certificate to vehicle 100 after completion of the contract for charging service, server 400 stores information about the digital certificate in storage device 402 in association with this vehicle 100. Server 400 may also obtain information about the digital certificate from vehicle 100 corresponding to terminal 500 that is the notification source or from vehicle 100 that is the notification source. The processing then proceeds to S106.

In S106, server 400 determines whether a digital certificate having a priority higher than that of the existing digital certificate stored in storage device 153 of vehicle 100 has been set.

When, for example, a priority higher than that of the existing digital certificate is set to a new digital certificate corresponding to the newly contracted charging service, server 400 determines that a digital certificate having a priority higher than that of the existing digital certificate has been set.

Alternatively, when, for example, the digital certificate having a priority changed to the highest priority is different from the existing digital certificate stored in storage device 153 of vehicle 100, server 400 determines that a digital certificate having a priority higher than that of the existing digital certificate has been set.

Alternatively, when, for example, the priority of the existing digital certificate stored in storage device 153 of vehicle 100 has been changed to a lower priority than before the change, server 400 determines that a digital certificate having a priority higher than that of the existing digital certificate has been set. When server 400 determines that a digital certificate having a priority higher than that of the existing digital certificate has been set (YES in S106), the processing proceeds to S108.

In S108, server 400 transmits priority information to vehicle 100. The priority information includes information about the digital certificate corresponding to the changed priority. The processing then proceeds to S110.

In S110, server 400 transmits, to vehicle 100, the data on the digital certificate having the highest priority among the changed priorities. When server 400 determines that a digital certificate having a priority higher than that of the existing digital certificate has not been set (NO in S106), the processing proceeds to S112.

In S112, server 400 transmits the priority information to vehicle 100. The priority information is as described above, so description thereof will not be repeated. When a priority change has not been notified (NO in S100), the processing ends.

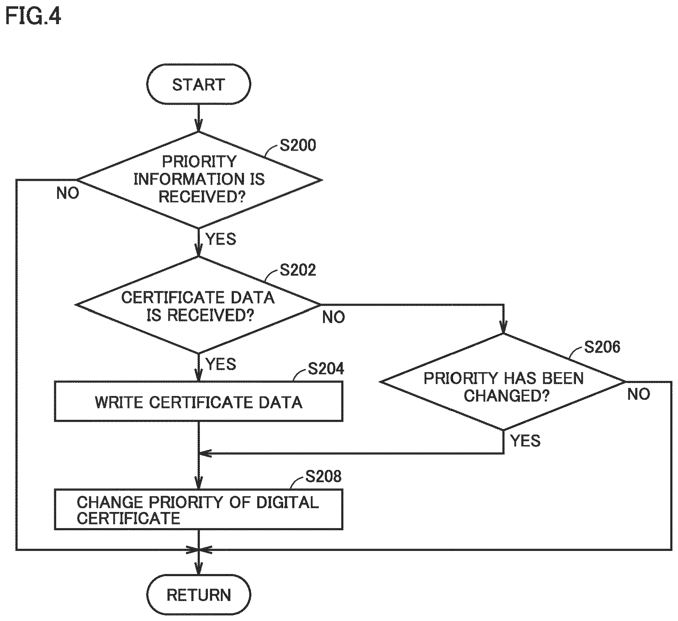

Referring to Fig. 4, example processing performed by vehicle 100 (specifically, ECU 150) will be described. Fig. 4 is a flowchart showing example processing performed by vehicle 100. A series of steps of processing shown in this flowchart are performed repeatedly at predetermined intervals.

In S200, vehicle 100 determines whether to receive priority information. The priority information is as described above, so description thereof will not be repeated. When vehicle 100 determines to receive priority information (YES in S200), the processing proceeds to S202.

In S202, vehicle 100 determines whether to receive data on a digital certificate. The data on a digital certificate includes data on a digital certificate having the highest priority among the changed priorities. When vehicle 100 determines to receive data on a digital certificate (YES in S202), the processing proceeds to S204.

In S204, vehicle 100 writes the received data on a digital certificate to storage device 153. For example, when the upper limit number of digital certificates that can be stored in vehicle 100 is "1", vehicle 100 deletes an existing digital certificate and then writes the received digital certificate. For example, when the upper limit number of digital certificates that can be stored in vehicle 100 is "2" or more and when there is only one existing digital certificate, vehicle 100 may delete the existing digital certificate and then write the received digital certificate, or additionally write the received digital certificate while maintaining the existing digital certificate. For example, when the upper limit number of digital certificates that can be stored in vehicle 100 is "2" or more and when there are a plurality of existing digital certificates, vehicle 100 may delete all existing digital certificates and then write the received digital certificate, delete a digital certificate having the highest priority among the existing digital certificates and then write the received digital certificate, or delete a digital certificate having the lowest priority among the existing digital certificates and then write the received digital certificate. The criterion for deleting an existing digital certificate may be predetermined in vehicle 100, or may be specified by server 400 in accordance with, for example, the standard adopted by vehicle 100. The processing then proceeds to S208. When vehicle 100 determines to receive no certificate data (NO in S202), the processing proceeds to S206.

In S206, vehicle 100 determines whether the priority has been changed. Vehicle 100 determines that the priority has not been changed when the relationship between the digital certificate and the priority included in the received priority information matches the relationship between the digital certificate and the priority stored in storage device 153 of vehicle 100, and determines that the priority has been changed when there is no match. When vehicle 100 determines that the priority has been changed (YES in S206), the processing proceeds to S208.

In S208, vehicle 100 changes the priority of the digital certificate. Specifically, vehicle 100 changes the priority of the digital certificate such that the relationship between the digital certificate and the priority stored in storage device 153 of vehicle 100 matches the relationship between the digital certificate and the priority included in the received priority information. The processing then ends. When vehicle 100 determines to receive no priority information (NO in S200) or when vehicle 100 determines that the priority has not been changed (NO in S206), the processing then ends.

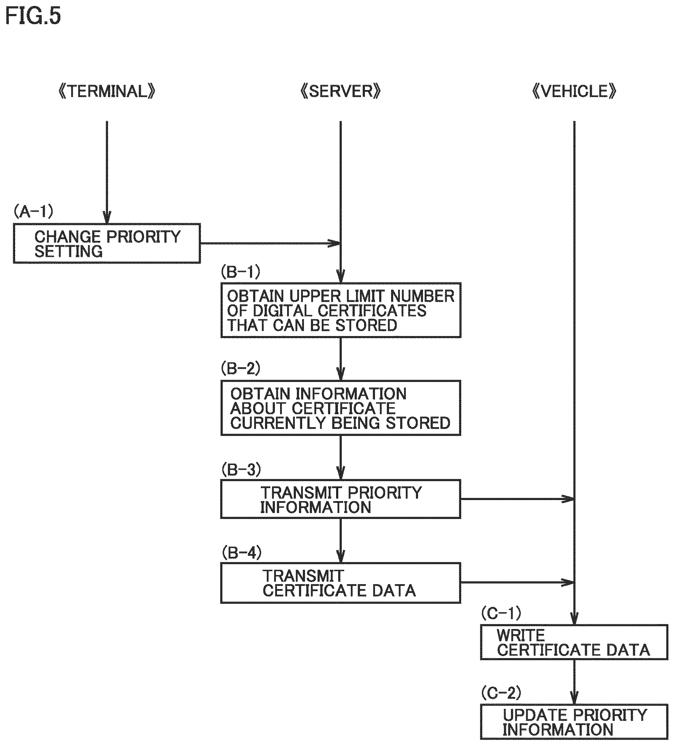

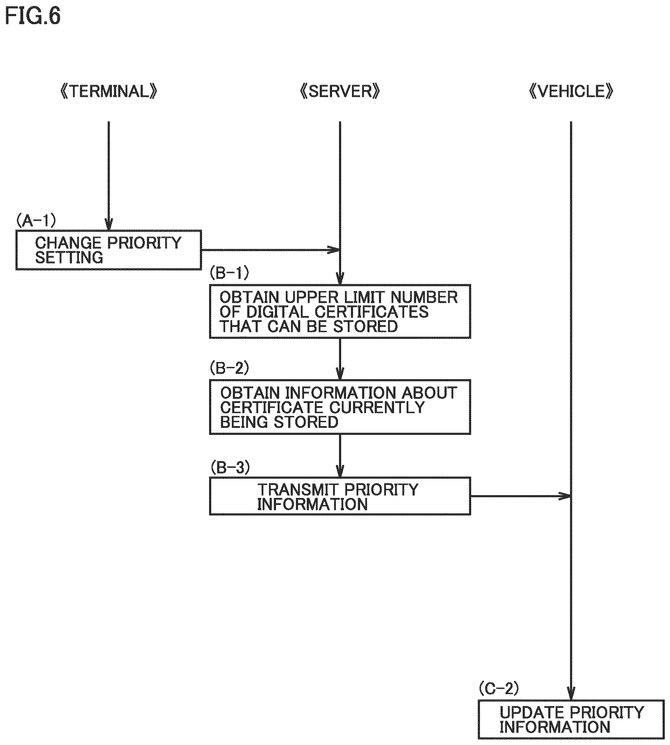

An example operation of authentication system 1 based on the above configuration and flowchart will be described with reference to Figs. 5 and 6.

Fig. 5 is a sequence diagram showing an example operation of authentication system 1 according to the present embodiment. As shown in (A-1) of Fig. 5, when the priority of the charging service is changed on the application of terminal 500, a notification of the change in priority setting is provided from terminal 500 to server 400.

When server 400 determines that it has received a notification of a priority change (YES in S100), server 400 obtains the upper limit number of digital certificates that can be stored (S102) as shown in (B-1) of Fig. 5, and obtains information about a digital certificate currently being stored (S104) as shown in (B-2) of Fig. 5.

When determining that a digital certificate having a priority higher than that of an existing digital certificate stored in storage device 153 of vehicle 100 has been set (YES in S106), server 400 transmits priority information (S108) as shown in (B-3) of Fig. 5, and transmit data on the digital certificate to vehicle 100 (S110) as shown in (B-4) of Fig. 5.

When vehicle 100 receives the priority information (YES in S200) and receives the data on the digital certificate (YES in S202), the digital certificate is written to storage device 153 of vehicle 100 (S204) as shown in (C-1) of Fig. 5. Then, the priority information is updated (S208) as shown in (C-2) of Fig. 5.

Fig. 6 is a sequence diagram showing another example operation of authentication system 1 according to the present embodiment. As shown in (A-1) of Fig. 6, when the priority of the charging service has been changed on the application of terminal 500, a notification of the change in the priority setting is provided from terminal 500 to server 400.

When determining that a notification of a priority change has been received (YES in S100), server 400 obtains the upper limit number of digital certificates that can be stored (S102) as shown in (B-1) of Fig. 6, and obtains information about a digital certificate currently being stored (S104) as shown in (B-2) of Fig. 6.

When determining that a digital certificate having a priority higher than that of the existing digital certificate stored in storage device 153 of vehicle 100 has not been stored (NO in S106), server 400 transmits priority information (S112) as shown in (B-3) of Fig. 6.

When receiving the priority information (YES in S200) and receiving no data on a digital certificate (NO in S202), vehicle 100 updates the priority information (S208) as shown in (C-2) of Fig. 5 because the priority has been changed (YES in S206).

As described above, according to authentication system 1 of the present embodiment, when the first priority is higher than the second priority, that is, when a digital certificate having a priority higher than that of an existing digital certificate is set, the digital certificate having the first priority is transmitted to the vehicle, and thus, as the digital certificate having the first priority is stored in storage device 153 of vehicle 100, a power stand corresponding to the digital certificate having the first priority can be used. When the first priority is lower than the second priority, the digital certificate having the first priority is not transmitted, and accordingly, an increase in the number of digital certificates stored in storage device 153 of vehicle 100 can be suppressed. Thus, an authentication system and a vehicle can be provided that suppress an increase in the number of stored digital certificates, thereby suppressing a decrease in convenience.

### Modifications will be described below.

The above embodiment has described by way of example the case where a notification of the change in priority setting is provided to server 400 in response to input of a user's operation in at least one of terminal 500 and vehicle 100. However, for example, when a travel route is set in the navigation system of vehicle 100, priorities may be changed such that the charging service allowing use of power stand 300 located on or around the travel route has a higher priority, and a notification of the change in priority setting may be provided to server 400.

Thus, the priority of the digital certificate allowing use of power stand 300 located on or around the travel route is set higher than the priority of the existing digital certificate, enabling quick charging or the like in use of power stand 300 when vehicle 100 travels on the set travel route.

Further, the above embodiment has described by way of example the case where a notification of the change in the priority setting is provided to server 400 in response to input of a user's operation in at least any one of terminal 500 and vehicle 100. However, terminal 500 may, for example, set the priority of the charging service higher as the timing of contracting the charging service is newer (more recent), and notify server 400 of the change in priority setting.

Thus, the newer contract may be used more frequently than the existing contract of charging service, and accordingly, power stand 300 corresponding to the newer contract can be used quickly as digital certificates are stored in storage device 153 of vehicle 100.

Further, the above embodiment has described by way of example the case where a notification of the change in priority setting is provided to server 400 in response to input of a user's operation at terminal 500. However, terminal 500 may also notify vehicle 100 of the change in priority setting in addition to server 400.

Thus, the priority of the existing digital certificate stored in storage device 153 of vehicle 100 can be changed without waiting for priority information from server 400.

The modifications described above may be implemented as appropriate in whole or in part in any combination.

Although the embodiment of the present disclosure has been described, it should be understood that the present embodiment disclosed herein is illustrative and non-restrictive in every respect. The scope of the present disclosure is defined by the terms of the claims and is intended to include any modifications within the scope and meaning equivalent to the terms of the claims.

## Claims

1. An authentication system comprising:
a server (400) that transmits a digital certificate used for authentication in use of a power stand (300) that performs power transmission between a power storage device (200) mounted in an electrically powered vehicle (100) and the power stand (300); and
a vehicle (100) including a storage device (153) that stores the digital certificate received from the server (400),
wherein upon receipt of a first priority of the digital certificate, the server (400) transmits the digital certificate having the first priority to the vehicle (100) when the first priority is higher than a second priority of an existing digital certificate stored in the storage device (153), and does not transmit the digital certificate having the first priority to the vehicle (100) when the first priority is lower than the second priority.

2. The authentication system according to claim 1, wherein upon receipt of the digital certificate having the first priority, the vehicle (100) replaces the existing digital certificate with the digital certificate having the first priority.

3. The authentication system according to claim 1, wherein upon receipt of the digital certificate having the first priority and when an upper limit number of digital certificates are stored in the storage device, the vehicle (100) replaces the digital certificate having a lowest priority among a plurality of the digital certificates with the digital certificate having the first priority.

4. The authentication system according to claim 1, wherein
the authentication system (1) includes a terminal (500), and
the terminal (500) sets the first priority in response to input of a user's operation and transmits information about the first priority to at least any one of the server (400) and the vehicle (100).

5. The authentication system according to claim 1, wherein the vehicle (100) sets the first priority in response to input of a user's operation and transmits information about the first priority to the server (400).

6. The authentication system according to claim 1, wherein the server (400) transmits information about the first priority to the vehicle (100) when the digital certificate having the first priority has been stored in the storage device (153).

7. The authentication system according to claim 1, wherein
the vehicle (100) includes a navigation system (170), and
the vehicle (100) sets a priority of the digital certificate higher than that of the existing digital certificate and transmits information about the set priority to the server (400), the digital certificate allowing use of the power stand (300) located on or around a travel route set by the navigation system (170).

8. A vehicle comprising:
a power storage device (200);
a storage device (153) that stores a digital certificate used for authentication in use of a power stand (300) that performs power transmission between the power storage device (200) and the power stand (300);
a communication device (140) configured to communicate with a server (400) that is a transmission source of the digital certificate; and
a controller (151) that writes the digital certificate to the storage device (153) upon receipt of the digital certificate from the server (400),
wherein the controller (151) compares a first priority of the digital certificate obtained by the server (400) with a second priority of an existing digital certificate stored in the storage device (153), changes the digital certificate to the digital certificate used preferentially for authentication in use of the power stand (300) when there is a change in relationship of magnitude between these priorities, and does not change the digital certificate used preferentially when there is no change in relationship of magnitude between these priorities.
